(19) **Europäisches Patentamt / European Patent Office / Office européen des brevets**

(11) **EP 4 760 797 A1**

(12) # EUROPEAN PATENT APPLICATION

(43) Date of publication:
**17.06.2026 Bulletin 2026/25**

(21) Application number: **25223027.1**

(22) Date of filing: **12.12.2025**

(51) International Patent Classification (IPC):
*H01M 4/131* (2010.01)  *H01M 4/505* (2010.01)
*H01M 4/525* (2010.01)  *H01M 4/62* (2006.01)
*H01M 10/0525* (2010.01)

(52) Cooperative Patent Classification (CPC):
**H01M 4/525; H01M 4/131; H01M 4/505;
H01M 4/625; H01M 4/626; H01M 10/0525;**
H01M 2004/021; H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **13.12.2024 KR 20240185942**

(71) Applicant: **SK On Co., Ltd.
Seoul 03161 (KR)**

(72) Inventors:
• **GIL, Na Eun
34124 Daejeon (KR)**

• **KIM, Min Cheol
34124 Daejeon (KR)**
• **KIM, Hyun Ji
34124 Daejeon (KR)**
• **LEE, Jong Hyeok
34124 Daejeon (KR)**
• **JO, Yoon Ji
34124 Daejeon (KR)**
• **KANG, Chul Ho
34124 Daejeon (KR)**

(74) Representative: **Prüfer & Partner mbB
Patentanwälte · Rechtsanwälte
Sohnckestraße 12
81479 München (DE)**

(54) **CATHODE FOR SECONDARY BATTERY AND SECONDARY BATTERY**

(57) A cathode for a secondary battery and a secondary battery comprising the cathode are provided. The cathode a cathode current collector, and a cathode active material layer on a surface of the cathode current collector which comprises a cathode active material. The cathode active material layer comprises a first plurality of pores having a diameter of 0.08 μm or less, and a second plurality of pores having a diameter of greater than 0.08 μm and 1 μm or less. A ratio of a second porosity to a first porosity is in a range from 1.75 to 3.6.

## FIG. 1

EP 4 760 797 A1

**Description**

BACKGROUND

1. Field

The disclosure of this patent application relates to a cathode for a secondary battery and a secondary battery.

2. Descriptions of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack comprising the secondary battery is being developed and applied as a power source of an eco-friendly vehicle such as a hybrid automobile.

Examples of the secondary battery comprise a lithium secondary battery, a sodium secondary battery, a potassium secondary battery, a nickel-cadmium battery, a nickel-hydrogen battery, etc. The lithium secondary battery among the secondary batteries is being actively developed due to high operational voltage and energy density per unit weight, a high charging rate, a compact dimension, etc.

For example, the lithium secondary battery may comprise an electrode assembly comprising a cathode, an anode, and a separation layer (separator), and an electrolyte impregnating the electrode assembly. The lithium secondary battery may further comprise an outer packaging material, e.g., a pouch-shaped packaging material, which accommodates the electrode assembly and the electrolyte.

The lithium secondary battery having a high capacity and an improved driving and storage stability in extreme environments of elevated temperature or low temperature may be advantageous. Thus, developments of a cathode capable of implementing a lithium secondary battery with high-capacity and high-stability are needed.

SUMMARY

According to an aspect of the present disclosure, there is provided a cathode for a secondary battery having improved electrochemical properties.

According to an aspect of the present disclosure, there is provided a secondary battery comprising the cathode for a secondary battery.

A cathode for a secondary battery comprises a cathode current collector, and a cathode active material layer comprising a cathode active material on a surface of the cathode current collector. The cathode active material layer comprises a first plurality of pores, each having a diameter of 0.08 $\mu$m or less, and a second plurality of pores, each having a diameter of greater than 0.08 $\mu$m and 1 $\mu$m or less. A first porosity is defined by Equation 1, a second porosity is defined by Equation 2, and the ratio of P2 to P1 (P2/P1) is in a range from about 1.75 to about 3.6.

$$(\text{Equation } 1)$$
$$P1 = 100 * V1 / (100\text{-}Vp\text{-}V2)$$

$$(\text{Equation } 2)$$
$$P2 = 100 * V2 / (100\text{-}Vp)$$

In Equations 1 and 2, P1 is the first porosity, P2 is the second porosity, V1 is the volume fraction of the first plurality of pores based on a total volume of the cathode active material layer, V2 is the volume fraction of the second plurality of pores based on the total volume of the cathode active material layer, and Vp is the volume fraction of the cathode active material based on the total volume of the cathode active material layer.

In some embodiments, the ratio of the second porosity to the first porosity is about 1.8 to about 3.4. As used herein, the term "about" refers to any value within 10% of the stated value.

In some embodiments, the first porosity is about 10% to about 45%.

In some embodiments, the second porosity is about 30% to about 90%.

In some embodiments, the cathode active material may comprise a lithium nickel metal oxide having a single particle structure.

In some embodiments, the cathode active material comprises about 70 mol% or less of nickel based on the total number of moles of elements, excluding lithium and oxygen of the lithium nickel metal oxide

In some embodiments, the cathode active material layer may further comprise a conductive material. The conductive material may comprise at least one material selected from the group consisting of a linear-type conductive material, a dot-shaped conductive material, and a plate-shaped conductive material.

In some embodiments, the cathode active material layer further comprises about 0.8 wt% to about 5 wt% of the conductive material based on a total weight of the cathode active material layer.

In some embodiments, the conductive material comprises a plate-shaped conductive material, and the ratio of the conductive material based on a total weight of the cathode active material layer to the plate-shaped conductive material based on a total weight of the cathode active material layer is about 1:1 to about 7:1.

In some embodiments, the conductive material comprises about 0.5 wt% to about 2 wt% of the linear-type conductive material based on a total weight of the cathode active material layer, the dot-shaped conductive material and the plate-shaped conductive material.

In some embodiments, the conductive material comprises about 0.01 wt% to about 0.5 wt% of the dot-shaped conductive material based on the total weight of the cathode active material layer.

In some embodiments, the volume fraction of the first plurality of pores is about 1% to about 4% based on the total volume of the cathode active material layer, and the volume fraction of the second plurality of pores is about 8% to about 20% based on the total volume of the cathode active material layer.

In some embodiments, a ratio of the volume fraction of the second plurality of pores to the volume fraction of the first plurality of pores is about 3 to about 16.

In some embodiments, the volume fraction of the first plurality of pores and the volume fraction of the second plurality of pores are calculated using a mercury intrusion porosimetry, for example, by generating a graph plotting volume with respect to a pore diameter of the cathode active material layer.

In some embodiments, the mercury intrusion porosimetry is performed by measuring the amount of mercury impregnated in a stack of at least two cathodes while increasing pressure to the stack. A graph may be generated by plotting the volume of impregnating mercury with respect to the pore diameter using Washburn's equation.

In another aspect, the present disclosure provides a secondary battery comprising the above-described cathode, and an anode disposed opposite the cathode.

In some embodiments, the secondary battery may be operated at a voltage of 4.35 V or higher.

The cathode for a secondary battery, according to embodiments of the present disclosure, may have a high capacity and a high energy density, and may have a low electrode resistance. Accordingly, a high-efficiency battery may be implemented.

The secondary battery according to embodiments of the present disclosure may have improved life-span properties and a reduced internal resistance to provide high charging/discharging efficiency.

The cathode for a secondary battery and the secondary battery comprising the cathode according to the present disclosure may be widely applied in green technology fields such as an electric vehicle, a battery charging station, a solar power generation, a wind power generation, etc., using a battery, etc. The cathode for a secondary battery and the secondary battery according to the present disclosure may be used for eco-friendly electric vehicles and hybrid vehicles to prevent a climate change by suppressing air pollution and greenhouse gas emissions, etc.

BRIEF DESCRIPTION OF THE DRAWINGS

FIG. 1 is a schematic plan view illustrating a lithium secondary battery in accordance with example embodiments.
FIG. 2 is a cross-sectional view illustrating a lithium secondary battery in accordance with example embodiments.

DETAILED DESCRIPTION OF THE EMBODIMENTS

Embodiments of the present disclosure provide a cathode comprising different plurality of pores. Embodiments of the present disclosure also provide a secondary battery comprising the cathode.

In the present disclosure, a cathode for a secondary battery may refer to a cathode in a fully discharged state after a formation of the secondary battery.

The terms "first" and "second" used herein are not intended to define the number or an order of objects, but are used to distinguish differently objects and elements in a relative sense.

A particle size used herein may represent an average diameter of a particle when the particle is spherical or may represent an average long axis length when the particle is non-spherical.

For example, an average particle diameter (D50) may be measured using a laser diffraction method. For example, an average particle diameter (D50) may be measured by dispersing the target particles in a dispersion medium, introducing the target particles into a commercially available laser diffraction particle size measuring device (e.g., Microtrac MT 3000), irradiating ultrasonic waves of about 28 kHz with a power of 60 W to obtain a particle size, wherein the D50 is the particle size at 50% of the cumulative particle volume distribution of the target particles .

A cathode for a secondary battery according to the present disclosure (hereinafter, referred to simply as "cathode") comprises a cathode current collector and a cathode active material layer disposed on a surface of the cathode current collector. The cathode may comprise the cathode active material layer disposed on one surface or both surfaces of the cathode current collector.

The cathode current collector may comprise, e.g., stainless steel, nickel, aluminum, titanium, copper, or an alloy thereof. In certain embodiments, the cathode current collector comprises aluminum or an aluminum alloy.

The cathode active material layer comprises a cathode active material, which may comprise a lithium nickel metal oxide (a lithium nickel metal oxide particle).

In example embodiments, the lithium nickel metal oxide may comprise lithium, nickel, oxygen, as well as elements different from nickel. In the lithium nickel metal oxide, nickel may present in the largest amount among total moles of all other elements, excluding the lithium and oxygen from the lithium nickel metal oxide. For example, the cathode active material may comprise about 70 mol% or less, or about 60 mol% or less of nickel based on the total moles of elements, excluding lithium and oxygen in the lithium nickel metal oxide. In another example, the cathode active material may comprise greater than 0 and about 70 mol% or less, greater than 0 and about 60 mol% or less, about 10 mol% to about 70 mol%, about 10 mol% to about 60 mol%, about 40 mol% to about 70 mol%, or about 40 mol% to about 60 mol% of nickel based on the total moles of elements other than lithium and oxygen in the lithium nickel metal oxide.

In example embodiments, the lithium nickel metal oxide may comprise nickel, cobalt, and manganese.

For example, nickel may be provided as a metal associated with improving power and/or capacity properties of a lithium secondary battery. As the nickel content increases, capacity properties of the lithium nickel metal oxide may be improved, but stability may be lowered.

For example, manganese (Mn) may be provided as it is commonly associated with mechanical and electrical stability. In another example, cobalt (Co) may be provided as it is commonly associated with controlling conductivity or resistance of a lithium secondary battery.

In example embodiments, the lithium nickel metal oxide particle may comprise a crystal structure represented by Chemical Formula 1.

[Chemical Formula 1] $\qquad$ $Li_aNi_{1-b}M2_bO_c$

In Chemical Formula 1, $0 < a \le 1.2$, $0 < b < 1$, $2 \le c \le 2.02$, and M2 comprises at least one element selected from the group consisting of Co, Mn, Na, Mg, Ca, Ti, V, Cr, Cu, Zn, Ge, Sr, Ag, Ba, Zr, Nb, Mo, Al, Ga, and B.

In certain embodiments of Chemical Formula 1, $0.4 \le b < 1$. In some embodiments of Chemical Formula 1, $0.4 \le b \le 0.7$ or $0.4 \le b < 0.6$.

In example embodiments, the lithium nickel metal oxide particle may have a crystal structure represented by Chemical Formula 1-1 below.

[Chemical Formula 1-1] $\qquad$ $Li_aNi_{1-d-c-f}CO_dMn_cM3_fO_c$

In Chemical Formula 1-1, $0 < a \le 1.2$, $2 \le c \le 2.02$, $0 < d \le 0.2$, $0 < e \le 0.4$, $0 \le f \le 0.2$, and M3 may comprise at least one selected from the group consisting of Na, Mg, Ca, Ti, V, Cr, Cu, Zn, Ge, Sr, Ag, Ba, Zr, Nb, Mo, Al, Ga and B.

In certain embodiments of Chemical Formula 1-1, $0.01 \le d \le 0.15$ and $0.1 \le e \le 0.35$.

In certain embodiments of Chemical Formula 1-1, $0.4 \le 1-d-e-f < 1$. In some embodiments, in Chemical Formula 1-1, $0.4 \le 1-d-e-f \le 0.7$ or $0.4 \le 1-d-e-f \le 0.6$.

In some embodiments, the molar ratio of the concentration of nickel to cobalt to manganese (Ni:Co:Mn) in the lithium nickel metal oxide particle may be adjusted to be about 6:1:3.

In example embodiments, an average particle diameter (D50) of the lithium nickel metal oxide particles may be in a range from about 2 μm to about 20 μm. In some embodiments, the average particle diameter (D50) of the lithium nickel metal oxide particles may be in a range from about 2 μm to about 10 μm, from about 3 μm to about 10 μm, or from about 3 μm to about 5 μm.

The lithium nickel metal oxide particles, according to exemplary embodiments of the disclosure, may have a single particle structure. As used herein, the term "single particle structure" is intended to exclude a secondary particle formed by agglomeration of multiple primary particles (e.g., more than 10 particles) into a single particle.

For example, in certain embodiments, the lithium nickel metal oxide particles may consist of or consist substantially of particles of the single particle structure or the single particle shape, and particles exhibiting the secondary particle structure formed by aggregation or agglomeration of the primary particles may be excluded.

The term "single particle structure", as used herein, does not exclude, e.g., a single-particle structure in which two to ten single particles are attached or adhered to each other to form a single body or a monolithic structure.

The single particle structure may also comprise a structure in which multiple primary particles are merged and transformed into a substantially single particle.

For example, the lithium nickel metal oxide particles may have a single particle structure comprising ten (10) or fewer crystallites.

In exemplary embodiments, the lithium nickel metal oxide particles may have a single crystalline structure. The single crystalline structure may comprise a structure in which one particle consists of one crystallite. The single crystalline structure may be distinguished based on an ion image obtained by analyzing a cross-section of a particle using a focused ion beam (FIB). For example, if a particle has a single crystalline structure, a single crystal may be observed in the FIB analysis image based on differences in a crystal orientation.

The cathode active material layer may comprise, in exemplary embodiments, about 90 wt% to about 99.99 wt% of cathode active material based on a total weight of the cathode active material layer. In some embodiments, the cathode active material layer comprises about 95 wt% to about 99 wt% of cathode active material based on the total weight of the cathode active material layer.

In example embodiments, the cathode active material layer may comprise a conductive material, which may be included to promote an electron transfer between the active material particles. The conductive material may have a particle size smaller than that of the active material particles. The conductive material may also be used to control a pore volume in the cathode active material layer.

Conductive materials suitable for use in an active material may comprise at least one material selected from the group consisting of a linear-type conductive material, a dot-shaped conductive material, and a plate-shaped conductive material. The dot-shaped conductive material may have a zero-dimensional shape, the linear conductive material may have a one-dimensional shape, and the plate-shaped conductive material may have a two-dimensional shape.

In some embodiments, the conductive material may comprise only the linear-type conductive material, only the dot-shaped conductive material, or only the plate-shaped conductive material. In some embodiments, the conductive material may comprise the linear-type conductive material and the dot-shaped conductive material, the linear-type conductive material and the plate-shaped conductive material, or the dot-shaped conductive material and the plate-shaped conductive material. In some embodiments, the conductive material may comprise the linear-type conductive material, the dot-shaped conductive material, and the plate-shaped conductive material.

The dot-shaped conductive material can be characterized by a particle shape, wherein the ratio of the longest diameter to the shortest diameter, each of which are in any three-dimensional direction, is less than 3. In certain embodiments, the dot-shaped conductive material has a spherical shape, a quasi-spherical shape, or an amorphous shape.

The dot-shaped conductive material may comprise carbon black, graphite, graphene, tin, tin oxide, titanium oxide, $LaSrCoO_3$, $LaSrMnO_3$, or the like. In one embodiment, the dot-shaped conductive material comprises carbon black.

The linear-type conductive material may have a rod shape or a ribbon shape, wherein the the longest diameter in the longitudinal direction. In the linear-type conductive material, the ratio of the longest diameter (in the longitudinal direction) to the shortest diameter (in any other three-dimensional direction) may be about three or more, e.g., in a range of about three to about one-thousand (1000).

In example embodiments, the linear-type conductive material may comprise carbon nanotube (CNT), vapor-grown carbon fiber (VGCF), carbon nanofiber (CNF), or the like. In one embodiment, the linear-type conductive material comprises carbon nanotube.

The plate-shaped conductive material may have a flake shape and a two-dimensional surface. The thickness of the plate-shaped conductive material may be less than 1/3 of the length of any two-dimensional directions.

The plate-shaped conductive material may comprise natural graphite, artificial graphite, or the like.

The above-mentioned conductive materials may be used alone or in a combination of two or more thereof.

In example embodiments, when the conductive material comprises the plate-shaped conductive material, the ratio of the conductive material based on the total weight of the cathode active material layer to the plate-shaped conductive material based on the total weight of the cathode active material layer may be in a range of about 1:1 to about 7:1. In some embodiments, when the conductive material comprises the plate-shaped conductive material, the ratio of the conductive material based on the total weight of the cathode active material layer to the plate-shaped conductive material based on the total weight of the cathode active material layer may be in a range of from about 1:1 to 4.5:1. For example, , the ratio of the total weight of the conductive material in the cathode active material layer to the weight of the plate-shaped conductive material in the cathode active material layer may be in a range from 1:1 to 7:1, or from 1:1 to 4.5:1.

Without wishing to be bound by theory, by manufacturing a cathode in this way, an increase in resistance of the cathode may be suppressed or prevented, even under high-voltage charge/discharge conditions, and life-span properties of the battery may be improved. The term "high voltage" used herein may refer to 4.3 V or higher, e.g., 4.35 V or higher.

In example embodiments, when the conductive material comprises the linear-type conductive material, the dot-shaped conductive material and the plate-shaped conductive material, the linear-type conductive material may be present in a range of about 0.5 wt% to about 2 wt% based on the total weight of the cathode active material layer. In some embodiments, the cathode active material layer comprises about 0.55 wt% to about 1 wt%, or about 0.6 wt% to about 0.9 wt% of the linear-type conductive material based on the total weight of the cathode active material layer.

In example embodiments, when the conductive material comprises the linear-type conductive material, the dot-shaped conductive material and the plate-shaped conductive material, the dot-shaped conductive material may be present in a range of about 0.01 wt% to about 0.5 wt% based on the total weight of the cathode active material layer. In some embodiments, the content cathode active material layer comprises about 0.03 wt% to about 0.3 wt%, or about 0.05 wt% to about 0.1 wt% of the dot-shaped conductive material based on the total weight of the cathode active material layer.

Without wishing to be bound by theory, by manufacturing a cathode in this way, the internal resistance of the battery may be further reduced, and the life-span properties of the battery may be enhanced.

In example embodiments, the cathode active material may comprise about 0.8 wt% to about 5 wt% of the conductive material based on the total weight of the cathode active material layer. In some embodiments, the cathode active material may comprise about 1 wt% to about 3 wt%, or from about 1.1 wt% to about 2.5 wt% of the conductive material .

Without wishing to be bound by theory, by manufacturing a cathode in this way, the cathode resistance may be reduced while preventing a capacity degradation during repeated charge and discharge cycles of the battery.

According to the various embodiments disclosed herein, the cathode active material layer may be a porous layer comprising a plurality of pores. The plurality of pores may comprise spaces between particles of the cathode active material layer, which may not be filled with a binder or other components (i.e., are substantially empty). The plurality of pores may have different diameters. The plurality of pores may be classified into a first plurality of pores and a second plurality of pores based on diameters thereof. The first plurality of pores and the second plurality of pores are based on measurements taken from the cathode in the fully discharged state after the formation of the secondary battery.

For example, a secondary battery comprising an electrode assembly in which a plurality of cathodes and a plurality of anodes are repeatedly stacked may be prepared. After the formation charge/discharge and a full discharge process of the secondary battery, the secondary battery may be disassembled to obtain cathodes in a fully discharged state.

The formation charge/discharge is not particularly limited as long as it is commonly used in the art. After the formation charge/discharge, the cathode in a state of charge (SOC) of 0% may be obtained by a full discharging process. In one embodiment, the full discharge process may be performed at a discharge rate of 0.33 C under the conditions of 2.5V cut-off, but is not limited thereto.

The first plurality of pores may be a group of pores having a relatively small diameter, and the second plurality of pores may be a group of pores having a relatively large diameter. For example, a cathode active material layer comprises a first plurality of pores, wherein the plurality has an average pore diameter of 0.08 $\mu$m or less or wherein each pore has a diameter of 0.08 $\mu$m or less, and a second plurality of pores, wherein the plurality has an average pore diameter of greater than 0.08 $\mu$m and 1 $\mu$m or less or wherein each pore has a diameter greater than 0.08 $\mu$m and 1 $\mu$m or less.

When the battery comprising the cathode comprises an electrolyte solution, the electrolyte solution may permeate through the second plurality of pores, which has a relatively larger diameter than the first plurality of pores, and then may permeate through the first plurality of pores. The second plurality of pores may serve as a main permeation path for the electrolyte solution in the cathode, and may serve as an ion transport path in the cathode.

In one embodiment, the first plurality of pores may have an average diameter in a range of from about 0.001 nm to about 0.08 $\mu$m. In some embodiments, all pores in the first plurality have a diameter in a range of from about 0.001 nm to about 0.08 $\mu$m.

In example embodiments, the volume fraction of pores in the cathode active material layer may be measured using mercury intrusion porosimetry wherein a pore volume of a porous sample is obtained by contacting the active material with mercury and measuring an amount of mercury impregnated into the pores.

Mercury intrusion porosimetry may be performed using a device and a method widely known in the related art, and is not limited to the following examples.

In example embodiments, a volume fraction of the first plurality of pores and a volume fraction of the second plurality of pores may be determined by establishing a relationship between volume according to a pore diameter of the cathode active material layer as determined using mercury intrusion porosimetry. In certain embodiments, the relationship can be depicted using a graph of a volume according to a pore diameter of the cathode active material layer.

In example embodiments, the mercury intrusion porosimetry may be performed by increasing a pressure in a stack of at least two cathodes and measuring the amount of mercury impregnated therein. A stack may be manufactured by stacking at least two cathodes, which may be sealed in a penetrometer of a suitable measuring device under vacuum environment. Thereafter, mercury may be permeated to the pores of the cathode active material layer. For example, a suitable measuring device may be an Autopore V9600 porosimeter (Micromeritics).

The stack is not limited to two cathodes, and in any embodiment may comprise 2 to 10 cathodes, and may be manufactured by stacking multiple cathodes in a thickness direction. For example, a stack may comprise three to eight cathodes, e.g., six cathodes.

The multiple cathodes may be cut before stacking, e.g., to a size of approximately 5 mm x 10 mm.

The mercury intrusion porosimetry analysis may be performed on the cathode in the fully discharged state after the formation of the secondary battery, as described above.

During the measurement, the pressure may be varied to induce permeation of the mercury into the pores. For example, the pressure may be varied within a range of 0.2 psi to 60,000 psi to induce permeation of the mercury into the pores, and the volume fraction may be measured based on the volume of pores having diameters ranging from about 30 Å to about 900 $\mu$m.

A graph measuring the volume according to the pore diameter in the cathode active material layer using the mercury intrusion porosimetry may be generated. Mercury may impregnate the pores of only a specific diameter or diameters at a specific pressure, and the resulting level of mercury impregnation may be used to calculate the pore volume.

In certain embodiments, a graph may be generated by plotting the volume of the mercury impregnation with respect to the pore diameter using Washburn's equation represented by Equation 3 below.

$$[\text{Equation 3}]$$

$$P * D = -4\sigma\cos\theta$$

In Equation 3, P represents pressure, D represents pore diameter, $\sigma$ represents surface tension of mercury, and $\theta$ represents the contact angle between mercury and the cathode active material layer.

In certain embodiments, $\theta$ may be about 120° to about 140°, e.g., about 130°.

According to Washburn's equation, the mercury impregnation amount depending on pressure can be converted into the mercury impregnation amount depending on the pore diameter.

The volume fraction can be calculated by dividing the volume of impregnated mercury by the volume of the cathode active material layer. The volume of impregnated mercury can be calculated by subtracting the weight of the sample and the capillary (penetrometer) from the weight of the capillary (penetrometer) with the mercury-impregnated sample. Data pertaining to a range of pore diameters of the first or second plurality of pores can be obtained, and the volume fraction of each plurality of pores can be calculated by using the weight of impregnated mercury within that range. The resultant value can be substituted into Equations 1 and 2 to calculate a first porosity and a second porosity.

In example embodiments, the first porosity can be defined by Equation 1 below and may be in a range of from about 10% to about 45%. In some embodiments, the first porosity may be in a range from about 12% to about 42%.

$$[\text{Equation 1}]$$

$$P1 = 100 * V1 / (100-Vp-V2)$$

In Equation 1, P1 represents the first porosity, V1 represents a volume fraction of the first plurality of pores based on the total volume of the cathode active material layer, V2 represents the volume fraction of the second plurality of pores based on the total volume of the cathode active material layer, and Vp represents the volume fraction of the cathode active material based on the total volume of the cathode active material layer.

In example embodiments, the second porosity can be defined by Equation 2 below, and may be in a range of from about 30% to about 90%. In some embodiments, the second porosity is about 33% to about 81%.

$$[\text{Equation 2}]$$

$$P2 = 100 * V2 / (100-Vp)$$

In Equation 2, P2 represents the second porosity, V2 represents the volume fraction of the second plurality of pores based on the total volume of the cathode active material layer, and Vp represents the volume fraction of the cathode active material based on the total volume of the cathode active material layer.

Without wishing to be bound by theory, by manufacturing a cathode in this way, ionic and electrical conductivity of the cathode may be further improved, the internal resistance of the battery may be reduced, and an increase in battery resistance due to high voltage may be suppressed.

In example embodiments, the second porosity P2 can be calculated according to Equation 2 from the measured value of the volume fraction of the second plurality of pores V2 and the volume fraction Vp of the cathode active material particles used in the preparation of the cathode active material layer.

The first porosity P1 can be calculated according to Equation 1 from the measured value of the volume fraction V2 of the second plurality of pores and the volume fraction Vp of the cathode active material particles, and the measured value of the volume fraction V1 of the first plurality of pores.

The volume fraction Vp of the cathode active material particles used in the preparation of the cathode active material layer can be calculated from a true density of the cathode active material particles, the mass of the cathode active material particles used in the preparation of the cathode active material layer, and the total volume of the cathode active material layer.

The first porosity P1 defined by Equation 1 and/or the second porosity P2 defined by Equation 2 are porosities of the cathode active material layer in a fully discharged state after the formation of the secondary battery.

In example embodiments, the volume of the first plurality of pores may be measured at a pressure of about 50 psi or less, e.g., in a range from about 0.2 psi to about 50 psi. The volume of the second plurality of pores may be measured at a pressure greater than about 50 psi, e.g., in a range from about 50 psi to about 60,000 psi.

In example embodiments, the volume fraction of the first plurality of pores based on the total volume of the cathode active material layer may be in a range of about 1% to about 4%. In some embodiments, the volume fraction of the first plurality of pores based on the total volume of the cathode active material layer may be in a range from about 1.2% to about 3.5%, or from about 1.5% to about 3%.

In example embodiments, the volume fraction of the second plurality of pores based on the total volume of the cathode active material layer may be in a range from about 8% to about 20%. In some embodiments, the volume fraction of the second plurality of pores based on the total volume of the cathode active material layer may be in a range from about 8.1% to about 18%, or from about 9% to about 17%.

Without wishing to be bound by theory, by manufacturing a cathode in this way, both ionic conductivity and electrical conductivity of the cathode may be improved, and the life-span properties of the battery may be improved.

The ratio (P2/P1) of the second porosity P2 to the first porosity P1 may be about 1.75 or greater, about 1.8 or greater, or about 1.81 or greater, and may be about 3.6 or less, about 3.4 or less, or about 3.37 or less. In example embodiments, the ratio (P2/P1) of the second porosity P2 to the first porosity P1 may be in a range from about 1.75:1 to about 3.6:1, from about 1.8 to about 3.4, or from about 1.81 to about 3.37.

Without wishing to be bound by theory, by manufacturing a cathode in this way, ionic and electrical conductivity of the cathode may be further improved, the internal battery resistance may be reduced, and the increase in battery resistance due to high voltage may be suppressed.

For example, if the ratio of the second porosity to the first porosity is below the above-described range, the volume of the second plurality of pores may become excessively small, and the electrolyte solution may not sufficiently penetrate into the cathode.

In another example, if the ratio of the second porosity to the first porosity exceeds the above-described range, contact points between the active material particles and conductive material particles comprised in the cathode active material layer may decrease, causing a decrease in the electrical conductivity of the cathode.

In example embodiments, the ratio (V2/V1) of the volume fraction of the second plurality of pores to the volume fraction of the first plurality of pores may be about 3 or greater, or about 5 or greater, and may be about 16 or less, or about 15 or less. In some embodiments, the ratio of the volume fraction of the second plurality of pores to the volume fraction of the first plurality of pores may be in a range of about 3 to about 16, or from about 5 to about 15.

In the various embodiments disclosed herein, the cathode active material layer may further comprise a binder. The binder may adhere the cathode active material and the conductive material with each other to increase a bonding strength between the cathode active material layer and the cathode current collector.

The binder may comprise an organic binder, such as, but not limited to, vinylidene fluoride-hexafluoropropylene copolymer (PVDF-co-HFP), polyvinylidene fluoride (PVDF), polyacrylonitrile, polymethylmethacrylate, etc., or an aqueous binder such as styrene-butadiene rubber (SBR) that may be used together with a thickener such as carboxymethyl cellulose (CMC).

For example, a PVDF-based binder may be used as a cathode binder. In this case, an amount of the binder for forming the cathode active material layer may be reduced, and an amount of the cathode active material particles may be increased, thereby improving power and capacity of the secondary battery.

A binder may be included in a cathode active layer in a range from about 0.5 wt% to about 5 wt% based on the total weight of the cathode active material layer. In some embodiments, the cathode active layer may comprise about 1 wt% to about 3 wt% of the binder based on the total weight of the cathode active material layer.

The thickness of the cathode active material layer is not particularly limiting. In a non-limiting example, the thickness of the cathode active material layer may be in a range from about 10 $\mu$m to about 200 $\mu$m.

In some embodiments, the cathode active material layer may comprise two or more layers containing different cathode active materials, conductive materials, and/or binders. For example, the cathode active material layer may comprise a first cathode active material layer and a second cathode active material layer, and types and/or contents of the active material, the conductive materials, and/or binders of the first cathode active material layer may be different from those of the second cathode active material layer.

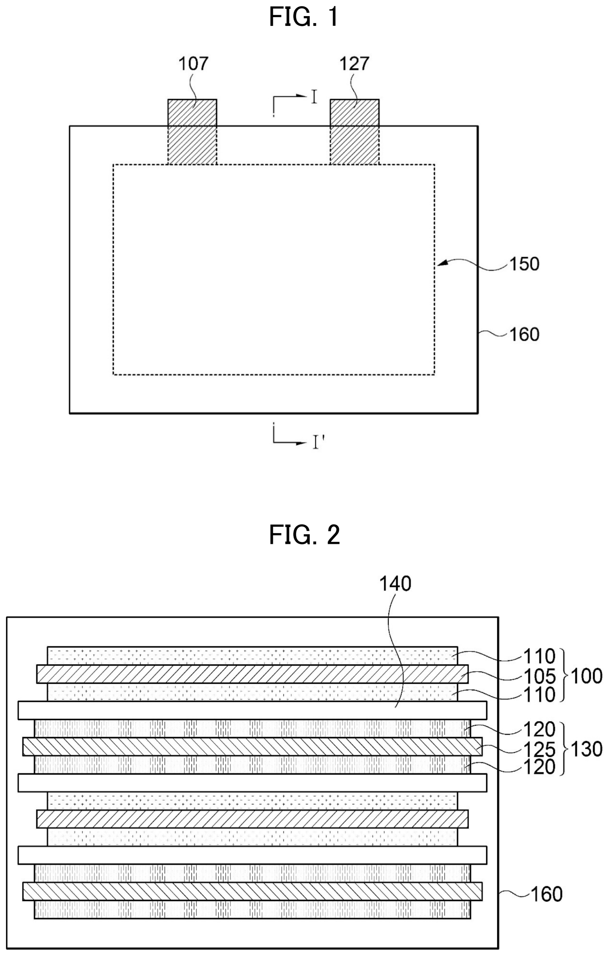

FIG. 1 and FIG. 2 are a schematic plan view and a cross-sectional view, respectively, illustrating a secondary battery according to embodiments. Specifically, FIG. 2 is a cross-sectional view taken along a line I-I' of FIG. 1 in a thickness direction of the secondary battery.

Referring to FIGS. 1 and 2, the secondary battery may comprise an electrode assembly 150 in a case 160. As illustrated in FIG. 2, the electrode assembly 150 may comprise a cathode 100, an anode 130, and a separator 140, which are repeatedly stacked. The secondary battery may be a lithium secondary battery.

The cathode 100 may comprise a cathode current collector 105 and a cathode active material layer 110 coated on the cathode current collector 105. The above descriptions of the cathode 100, the cathode current collector 105 and the cathode active material layer 110 may be applied in the secondary battery.

The anode 130 may comprise an anode current collector 125 and an anode active material layer 120 which may be formed by coating an anode active material on the anode current collector 125.

An anode active material may comprise a material capable of intercalating and deintercalating lithium ions. Suitable materials are widely known in the related art may be used without any limitation. For example, a carbon-based material such as crystalline carbon, amorphous carbon, a carbon composite, a carbon fiber, a lithium alloy, silicon or tin, etc., may be used.

Examples of amorphous carbon may include, but are not limited to, hard carbon, coke, a mesocarbon microbeads (MCM) fired at 1,500°C or less, a mesophase pitch-based carbon fiber (MPCF), etc. Examples of crystalline carbon include, but are not limited to, a graphite-based carbon such as natural graphite, a graphitized coke, a graphitized MCMB, a graphitized MPCF, etc. Examples of elements that may be included in the lithium alloy include, but are not limited to, aluminum, zinc, bismuth, cadmium, antimony, silicon, lead, tin, gallium, indium, and the like.

The anode current collector 125 may comprise gold, stainless steel, nickel, aluminum, titanium, copper, or any alloy thereof. In one embodiment, the anode current collector 125 comprises copper or a copper alloy.

In some embodiments, a slurry may be prepared by mixing and stirring the anode active material with a binder, a conductive material, and/or a dispersant in a solvent. The slurry may then be coated on at least one surface of the anode current collector 125 and then dried and pressed to prepare the anode 130.

Materials the same as or like those used in the cathode active material layer 110 may be used as the binder and the conductive material. In some examples, the binder for forming the anode may comprise an aqueous binder such as styrene-butadiene rubber (SBR) for compatibility with the carbon-based active material and may be used together with a thickener such as carboxymethyl cellulose (CMC).

The separator 140 may be interposed between the cathode 100 and the anode 130. The separator 140 may comprise a porous polymer film formed of a polyolefin-based polymer such as an ethylene homopolymer, a propylene homopolymer, an ethylene/butene copolymer, an ethylene/hexene copolymer, an ethylene/methacrylate copolymer, or the like. The separator 140 may comprise a nonwoven fabric formed of a glass fiber having a high melting point, a polyethylene terephthalate fiber, or the like.

In some embodiments, the area (e.g., a contact area with the separator 140) and/or the volume of the anode 130 may be larger than that of the cathode 100. In such embodiments, lithium ions generated from the cathode 100 may be easily transferred to the anode 130 without being precipitated or deposited.

An electrode cell may be defined as the combination of the cathode 100, the anode 130 and the separator 140, and a plurality of the electrode cells may be stacked to form, e.g., an electrode assembly 150 in the form, e.g., of a jelly roll. For example, the electrode assembly 150 may be formed by winding, stacking, folding, etc., of the separator 140.

The electrode assembly 150 may be disposed together with an electrolyte solution in the case 160 to prepare a lithium secondary battery. In example embodiments, a non-aqueous electrolyte solution may be used as the electrolyte solution.

The non-aqueous electrolyte solution may comprise a lithium salt as the electrolyte and an organic solvent. For example, the lithium salt may be expressed as $Li^+X^-$. Examples of an anions ($X^-$) of the lithium salt may include, but are not limited to, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may comprise, e.g., propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, gamma-butyrolactone, propylene sulfite, tetrahydrofuran, or the like. These may be used alone or in a combination of two or more therefrom.

As illustrated in FIG. 1, electrode tabs (a cathode tab and an anode tab) in each electrode cell may protrude from the cathode current collector 105 and the anode current collector 125, respectively, to extend to one side of the case 160. The electrode tabs may be fused together with the one side of the case 160 to be connected to an electrode lead (a cathode lead 107 and an anode lead 127) which are extended or exposed to an outside of the case 160.

Although FIG. 1 illustrates that the cathode lead 107 and the anode lead 127 are formed at an upper side of the case 160 in a plan view, the construction of the electrode leads is not limited to that of FIG. 1. For example, the electrode leads may protrude from at least one of both sides of the case 160, or may protrude from a lower side of the case 160.

Alternatively, the cathode lead 107 and the anode lead 127 may protrude from different sides of the case 160.

In one example, the secondary battery may be manufactured in a cylindrical type using a can, a prismatic type, a pouch type, or a coin type.

Examples and Comparative Examples

$LiNi_{0.6}Co_{0.1}Mn_{0.3}O_2$ (diameter: 3.5 $\mu$m) having a single particle structure as a cathode active material, carbon black as a dot-type conductive material, carbon nanotube as a linear-type conductive material, graphite as a plate-shaped conductive material, and polyvinylidene fluoride (PVDF) as a binder were mixed in a weight ratio shown in Table 1 below, and then mixed with N-methyl pyrrolidone as a solvent to prepare a cathode slurry.

The cathode slurry was coated on one surface of an aluminum current collector (thickness: 12 $\mu$m), dried and pressed to prepare a cathode.

Fabrication of battery

Artificial graphite and natural graphite as an anode active material, styrene-butadiene rubber as a binder, and carboxymethyl cellulose as a thickener were mixed in a weight ratio of 97.5:1.2:1.1 and dispersed in water to form a slurry. The slurry was coated on a 6-$\mu$m-thick copper foil, dried, and pressed to prepare an anode.

A polyethylene (PE) film separator having a thickness of 13 $\mu$m was stacked between the cathode and anode to form an electrode assembly. The electrode assembly was inserted into a pouch having a size of 12.5 mm (thickness) x 342 mm (width) x 102 mm (length) to form a cell. An electrolyte solution was injected into the cell to prepare a 73.5-Ah secondary battery for EV. A 1.0 M $LiPF_6$ solution prepared using a solvent containing ethylene carbonate (EC) and ethyl methyl carbonate (EMC) in a volume ratio of 25:75 was used as the electrolyte solution.

The secondary batteries of the Examples and Comparative Examples were charged to 4.3 V at 0.25 C and discharged to 2.5 V at 0.25 C, then subjected to a formation process under the conditions of charging to 3.5 V at 0.25 C. Thereafter, the secondary batteries were fully discharged to SOC 0% under the conditions of 0.33 C, 2.5 V cut-off so that the cathodes in the fully discharged state after the formation process were obtained.

A volume distribution of the cathode active material layer according to a pore diameter was analyzed for the cathodes using a mercury intrusion porosimetry by Autopore V9600. Specifically, the cathode was cut into a size of 5 mm x 10 mm, and six pieces were stacked to form a stack. The stack was placed in a penetrometer, an inlet was sealed, and measurements were performed. The measurements were performed at varying a pressure from 0.2 psi to 20,000 psi, and a graph of volume with respect to the pore diameter was obtained using Equation 3.

From the graph of volume with respect to the pore diameter, volume fractions V1 and V2 of a first plurality of pores (having a pore diameter of 0.08 $\mu$m or less) and a second plurality of pores (having a pore diameter of greater than 0.08 $\mu$m), respectively, based on a total volume of the cathode active material layer were calculated.

The volume fraction V1 of the first plurality of pores and the volume fraction V2 of the second plurality of pores, a first porosity P1, a second porosity P2, and a ratio thereof calculated using Equations 1 and 2 from a volume fraction Vp of the cathode active material used in preparing the cathode are shown in Table 2.

[Table 1]

| | cathode active material (weight ratio) | | | | |
|---|---|---|---|---|---|
| | cathode active material | conductive material | | | binder |
| | | dot-type | linear-type | plate-shaped | |
| Example 1 | 98.08 | 0.72 | 0 | 0 | 1.2 |
| Example 2 | 97.96 | 0.84 | 0 | 0 | 1.2 |
| Example 3 | 97.68 | 0.72 | 0.4 | 0 | 1.2 |
| Example 4 | 97.52 | 0.48 | 0.8 | 0 | 1.2 |
| Example 5 | 97.52 | 0.48 | 0 | 0.8 | 1.2 |
| Example 6 | 97.52 | 0.48 | 0.3 | 0.5 | 1.2 |
| Example 7 | 97.37 | 0.48 | 0.6 | 0.35 | 1.2 |
| Example 8 | 96.8 | 2 | 0 | 0 | 1.2 |
| Example 9 | 96.8 | 0 | 0 | 2 | 1.2 |
| Example 10 | 96.5 | 0 | 1.3 | 1 | 1.2 |

(continued)

| | cathode active material (weight ratio) | | | | |
| | cathode active material | conductive material | | | binder |
| | | dot-type | linear-type | plate-shaped | |
| Example 11 | 96.45 | 0 | 1.2 | 1.15 | 1.2 |
| Example 12 | 96.3 | 0 | 1.1 | 1.4 | 1.2 |
| Example 13 | 95.8 | 0 | 0 | 3 | 1.2 |
| Example 14 | 94.8 | 0 | 0 | 4 | 1.2 |
| Comparative Example 1 | 98.8 | 0 | 0 | 0 | 1.2 |
| Comparative Example 2 | 97.8 | 0 | 1 | 0 | 1.2 |
| Comparative Example 3 | 97.68 | 0.72 | 0.1 | 0.3 | 1.2 |
| Comparative Example 4 | 97.68 | 0.72 | 0 | 0.4 | 1.2 |
| Comparative Example 5 | 97.63 | 0.72 | 0.05 | 0.4 | 1.2 |
| Comparative Example 6 | 97.3 | 0 | 1.5 | 0 | 1.2 |
| Comparative Example 7 | 97.22 | 0.48 | 0.9 | 0.2 | 1.2 |
| Comparative Example 8 | 97 | 0 | 1.8 | 0 | 1.2 |

[Table 2]

| | porosity | volume fraction | | | | |
| | first porosity (P1, %) | second porosity (P2, %) | ratio (P2/P1) | first plurality of pores (V1, %) | second plurality of pores (V2, %) | ratio (V2/V1) |
| Example 1 | 12.2 | 33.7 | 2.77 | 1.95 | 8.17 | 4.19 |
| Example 2 | 15.5 | 52.2 | 3.37 | 1.62 | 12.71 | 7.84 |
| Example 3 | 41.9 | 75.7 | 1.81 | 2.50 | 18.58 | 7.44 |
| Example 4 | 31.1 | 63.0 | 2.03 | 2.83 | 15.54 | 5.48 |
| Example 5 | 26.1 | 80.3 | 3.07 | 1.27 | 19.80 | 15.59 |
| Example 6 | 30.2 | 64.0 | 2.12 | 2.68 | 15.79 | 5.89 |
| Example 7 | 32.8 | 65.7 | 2.01 | 2.78 | 16.29 | 5.86 |
| Example 8 | 13.1 | 36.9 | 2.82 | 2.08 | 9.32 | 4.47 |
| Example 9 | 30.1 | 66.0 | 2.19 | 2.58 | 16.65 | 6.45 |
| Example 10 | 21.7 | 56.2 | 2.59 | 2.42 | 14.30 | 5.91 |
| Example 11 | 23.6 | 60.4 | 2.56 | 2.38 | 15.39 | 6.46 |
| Example 12 | 25.1 | 65.0 | 2.59 | 2.25 | 16.64 | 7.40 |
| Example 13 | 27.8 | 65.0 | 2.33 | 2.53 | 16.89 | 6.66 |
| Example 14 | 27.8 | 63.9 | 2.30 | 2.69 | 17.10 | 6.36 |
| Comparative Example 1 | 8.1 | 34.2 | 4.19 | 1.27 | 8.09 | 6.37 |
| Comparative Example 2 | 27.3 | 45.3 | 1.66 | 3.65 | 11.08 | 3.04 |
| Comparative Example 3 | 20.1 | 73.2 | 3.65 | 1.32 | 17.96 | 13.61 |
| Comparative Example 4 | 18.6 | 71.5 | 3.84 | 1.30 | 17.54 | 13.47 |
| Comparative Example 5 | 19.6 | 71.8 | 3.66 | 1.36 | 17.64 | 12.97 |

(continued)

| | porosity | volume fraction | | | | |
| --- | --- | --- | --- | --- | --- | --- |
| | first porosity (P1, %) | second porosity (P2, %) | ratio (P2/P1) | first plurality of pores (V1, %) | second plurality of pores (V2, %) | ratio (V2/V1) |
| Comparative Example 6 | 27.6 | 45.3 | 1.65 | 3.74 | 11.3 | 3.02 |
| Comparative Example 7 | 31.3 | 53.4 | 1.71 | 3.63 | 13.3 | 3.66 |
| Comparative Example 8 | 28.0 | 45.9 | 1.64 | 3.8 | 11.5 | 3.03 |

Experimental Example: Evaluation on battery life-span property

To evaluate a life-span property of the battery, the secondary batteries of the Examples and Comparative Examples were subjected to a reference performance test with a 100-cycle interval. In the reference performance test, a cell capacity by performing 0.33C CC/CV charging (4.3V, 0.05C cut-off) and 0.33C CC discharge at 25°C was measured.
To measure a resistance of the secondary battery, the batteries were charged under the conditions of 0.33C CC/CV (4.3V, 0.05C cut-off) at 25°C, followed by 0.33C CC discharge to 50% SOC. At the 50% SOC, a 1C discharge current was applied for 10 seconds, and a D-DCIR was measured.
The battery was charged at 0.33C CC/CV (4.3V 0.05C CUT-OFF) and 0.33C CC discharged at 45°C. The life-span property was evaluated by the number of cycles when the discharge capacity reached 80% of an initial reference performance test discharge capacity.
A resistance increase ratio was calculated as a ratio of a battery resistance based on an initial reference performance test resistance value when the discharge capacity reached 80% of the initial reference performance test discharge capacity.
The evaluation results are shown in Table 3 below.

[Table 3]

| | battery internal resistance (mΩ) | The number of cycles at 80% capacity | resistance increase ratio (%) |
| --- | --- | --- | --- |
| Example 1 | 1.27 | 2000 | 190 |
| Example 2 | 1.25 | 2100 | 180 |
| Example 3 | 1.23 | 2300 | 180 |
| Example 4 | 1.22 | 2500 | 160 |
| Example 5 | 1.27 | 2000 | 190 |
| Example 6 | 1.27 | 2200 | 180 |
| Example 7 | 1.22 | 2600 | 170 |
| Example 8 | 1.21 | 2000 | 170 |
| Example 9 | 1.26 | 2500 | 160 |
| Example 10 | 1.19 | 2700 | 170 |
| Example 11 | 1.23 | 2500 | 180 |
| Example 12 | 1.29 | 2300 | 190 |
| Example 13 | 1.29 | 2400 | 170 |
| Example 14 | 1.28 | 2400 | 190 |
| Comparative Example 1 | 1.60 | 1800 | 240 |
| Comparative Example 2 | 1.65 | 1700 | 240 |
| Comparative Example 3 | 1.38 | 1700 | 220 |
| Comparative Example 4 | 1.33 | 1900 | 210 |

(continued)

|  | battery internal resistance (mΩ) | The number of cycles at 80% capacity | resistance increase ratio (%) |
|---|---|---|---|
| Comparative Example 5 | 1.36 | 1900 | 210 |
| Comparative Example 6 | 1.59 | 1700 | 220 |
| Comparative Example 7 | 1.45 | 1900 | 220 |
| Comparative Example 8 | 1.52 | 1800 | 200 |

Referring to Tables 2 and 3, in the batteries of Examples, the internal resistance and the resistance increase ratio were less than 1.30 mΩ and less than 200%, respectively. Further, the batteries of Examples provided improved capacity retentions greater than 80% even after repeated charge/discharge cycles in the high-voltage environment for more than 2,000 cycles.

In the batteries of Comparative Example 2, and Comparative Examples 6 to 8 where the porosity ratio of the second plurality of pores to the first plurality of pores was less than 1.75, the capacity was rapidly decreased during repeated charge/discharge cycles in the high-voltage environment. In the batteries of Comparative Examples 1, and Comparative Examples 3 to 5, where the porosity ratio of the second plurality of pores to the first plurality of pores was greater than 3.6, the internal battery resistance and the resistance increase ratio during repeated charge/discharge cycles excessively increased, resulting in degraded performance.

The invention relates also to the following numbered aspects:

Aspect 1. A cathode for a secondary battery, comprising:

a cathode current collector; and
a cathode active material layer on a surface of the cathode current collector,
wherein the cathode active material layer comprises a cathode active material,
wherein the cathode active material layer comprises a first plurality of pores each having a diameter of 0.08 μm or less, and a second plurality of pores each having a diameter of greater than 0.08 μm and 1 μm or less,
wherein a first porosity is defined by Equation 1 and a second porosity is defined by Equation 2:

$$\text{(Equation 1)}$$

$$P1 = 100 * V1 / (100\text{-}Vp\text{-}V2)$$

$$\text{(Equation 2)}$$

$$P2 = 100 * V2 / (100\text{-}Vp)$$

wherein, in Equations 1 and 2, P1 is the first porosity, P2 is the second porosity, V1 is a volume fraction of the first plurality of pores based on a total volume of the cathode active material layer, V2 is a volume fraction of the second plurality of pores based on the total volume of the cathode active material layer, and Vp is a volume fraction of the cathode active material based on the total volume of the cathode active material layer,
wherein the ratio of P2 to P1 (P2/P1) is in a range from about 1.75 to about 3.6.

Aspect 2. The cathode for a secondary battery of aspect 1, wherein the ratio of the P2 to the P1 is in a range from about 1.8 to about 3.4.

Aspect 3. The cathode for a secondary battery of aspect 1 or 2, wherein (a) the first porosity is about 10% to about 45%, and/or (b) the second porosity about 30% to about 90%.

Aspect 4. The cathode for a secondary battery of any one of aspects 1 to 3, wherein the cathode active material comprises a lithium nickel metal oxide having a single particle structure.

Aspect 5. The cathode for a secondary battery of aspect 4, wherein the cathode active material comprises about 70 mol% or less of nickel based on the total number of moles of all elements, excluding lithium and oxygen of the lithium nickel metal oxide.

Aspect 6. The cathode for a secondary battery of any one of aspects 1 to 5, wherein the cathode active material layer further comprises a conductive material,

wherein the conductive material comprises at least one material selected from the group consisting of a linear-type conductive material, a dot-shaped conductive material, and a plate-shaped conductive material.

Aspect 7. The cathode for a secondary battery of aspect 6, wherein the cathode active material layer further comprises about 0.8 wt% to about 5 wt% of the conductive material based on a total weight of the cathode active material layer.

Aspect 8. The cathode for a secondary battery of aspect 6 or 7, wherein the conductive material comprises the plate-shaped conductive material, and wherein the ratio of the conductive material based on a total weight of the cathode active material layer to the plate-shaped conductive material based on a total weight of the cathode active material layer is about 1:1 to about 7:1.

Aspect 9. The cathode for a secondary battery of any one of aspects 6 to 8, wherein the conductive material comprises the linear-type conductive material, the dot-shaped conductive material, and the plate-shaped conductive material, wherein (a) a content of the linear-type conductive material based on a total weight of the cathode active material layer is about 0.5 wt% to about 2 wt%, and/or (b) a content of the dot-shaped conductive material based on the total weight of the cathode active material layer is about 0.01 wt% to about 0.5 wt%.

Aspect 10. The cathode for a secondary battery of any one of aspects 1 to 9, wherein (a) the volume fraction of the first plurality of pores is about 1% to about 4% based on the total volume of the cathode active material layer, and/or (b) the volume fraction of the second plurality of pores is about 8% to about 20% based on the total volume of the cathode active material layer.

Aspect 11. The cathode for a secondary battery of aspect 10, wherein a ratio of the volume fraction of the second plurality of pores to the volume fraction of the first plurality of pores is about 3 to about 16.

Aspect 12. The cathode for a secondary battery of any one of aspects 1 to 11, wherein the volume fraction of the first plurality of pores and the volume fraction of the second plurality of pores are calculated using a mercury intrusion porosimetry.

Aspect 13. The secondary battery cathode of aspect 12, wherein the mercury intrusion porosimetry is performed by measuring a volume of mercury impregnated in a stack of at least two cathodes under pressure.

Aspect 14. A secondary battery, comprising:

the cathode for a secondary battery according to any one of aspects 1 to 13; and an anode disposed opposite the cathode.

Aspect 15. The secondary battery of aspect 14, wherein the secondary battery is operated at a voltage of 4.35 V or higher.

**Claims**

1. A cathode for a secondary battery, comprising:

   a cathode current collector; and
   a cathode active material layer on a surface of the cathode current collector,
   wherein the cathode active material layer comprises a cathode active material,
   wherein the cathode active material layer comprises a first plurality of pores each having a diameter of 0.08 $\mu$m or less, and a second plurality of pores each having a diameter of greater than 0.08 $\mu$m and 1 $\mu$m or less,
   wherein a first porosity is defined by Equation 1 and a second porosity is defined by Equation 2:

   $$(\text{Equation 1})$$
   $$P1 = 100 * V1 / (100\text{-}Vp\text{-}V2)$$

   $$(\text{Equation 2})$$
   $$P2 = 100 * V2 / (100\text{-}Vp)$$

   wherein, in Equations 1 and 2, P1 is the first porosity, P2 is the second porosity, V1 is a volume fraction of the first plurality of pores based on a total volume of the cathode active material layer, V2 is a volume fraction of the second plurality of pores based on the total volume of the cathode active material layer, and Vp is a volume fraction of the cathode active material based on the total volume of the cathode active material layer,
wherein the ratio of P2 to P1 (P2/P1) is in a range from about 1.75 to about 3.6.

2. The cathode for a secondary battery of claim 1, wherein the ratio of the P2 to the P1 is in a range from about 1.8 to about 3.4.

3. The cathode for a secondary battery of claim 1 or 2, wherein (a) the first porosity is about 10% to about 45%, and/or (b) the second porosity about 30% to about 90%.

4. The cathode for a secondary battery of any one of claims 1 to 3, wherein the cathode active material comprises a lithium nickel metal oxide having a single particle structure.

5. The cathode for a secondary battery of claim 4, wherein the cathode active material comprises about 70 mol% or less of nickel based on the total number of moles of all elements, excluding lithium and oxygen of the lithium nickel metal oxide.

6. The cathode for a secondary battery of any one of claims 1 to 5, wherein the cathode active material layer further comprises a conductive material,
wherein the conductive material comprises at least one material selected from the group consisting of a linear-type conductive material, a dot-shaped conductive material, and a plate-shaped conductive material.

7. The cathode for a secondary battery of claim 6, wherein the cathode active material layer further comprises about 0.8 wt% to about 5 wt% of the conductive material based on a total weight of the cathode active material layer.

8. The cathode for a secondary battery of claim 6 or 7, wherein the conductive material comprises the plate-shaped conductive material, and wherein the ratio of the conductive material based on a total weight of the cathode active material layer to the plate-shaped conductive material based on a total weight of the cathode active material layer is about 1:1 to about 7:1.

9. The cathode for a secondary battery of any one of claims 6 to 8, wherein the conductive material comprises the linear-type conductive material, the dot-shaped conductive material, and the plate-shaped conductive material,

wherein (a) a content of the linear-type conductive material based on a total weight of the cathode active material layer is about 0.5 wt% to about 2 wt%, and/or
(b) a content of the dot-shaped conductive material based on the total weight of the cathode active material layer is about 0.01 wt% to about 0.5 wt%.

10. The cathode for a secondary battery of any one of claims 1 to 9, wherein (a) the volume fraction of the first plurality of pores is about 1% to about 4% based on the total volume of the cathode active material layer, and/or (b) the volume fraction of the second plurality of pores is about 8% to about 20% based on the total volume of the cathode active material layer.

11. The cathode for a secondary battery of claim 10, wherein a ratio of the volume fraction of the second plurality of pores to the volume fraction of the first plurality of pores is about 3 to about 16.

12. The cathode for a secondary battery of any one of claims 1 to 11, wherein the volume fraction of the first plurality of pores and the volume fraction of the second plurality of pores are calculated using a mercury intrusion porosimetry .

13. The secondary battery cathode of claim 12, wherein the mercury intrusion porosimetry is performed by measuring a volume of mercury impregnated in a stack of at least two cathodes under pressure.

14. A secondary battery, comprising:

the cathode for a secondary battery according to any one of claims 1 to 13; and
an anode disposed opposite the cathode.

15. The secondary battery of claim 14, wherein the secondary battery is operated at a voltage of 4.35 V or higher.

# FIG. 1

# FIG. 2

Europäisches
Patentamt

European
Patent Office

Office européen
des brevets

# EUROPEAN SEARCH REPORT

**Application Number**

**EP 25 22 3027**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 481 844 A1 (LG ENERGY SOLUTION LTD [KR]) 25 December 2024 (2024-12-25) * paragraphs [0075] - [0090] * ----- | 1-15 | INV. H01M4/131 H01M4/505 H01M4/525 |
| X | JP 2010 278015 A (MITSUBISHI CHEM CORP) 9 December 2010 (2010-12-09) * paragraphs [0070] - [0122] * ----- | 1-15 | H01M4/62 H01M10/0525 |

TECHNICAL FIELDS
SEARCHED        (IPC)

H01M

The present search report has been drawn up for all claims

| Place of search | Date of completion of the search | Examiner |
|---|---|---|
| Munich | 2 April 2026 | Mugnaini, Veronica |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P4C01)

## ANNEX TO THE EUROPEAN SEARCH REPORT
## ON EUROPEAN PATENT APPLICATION NO.

EP 25 22 3027

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2026

| Patent document cited in search report | | Publication date | Patent family member(s) | | Publication date |
|---|---|---|---|---|---|
| EP 4481844 | A1 | 25-12-2024 | CN | 121219859 A | 26-12-2025 |
| | | | EP | 4481844 A1 | 25-12-2024 |
| | | | KR | 20240178693 A | 31-12-2024 |
| | | | US | 2024429382 A1 | 26-12-2024 |
| JP 2010278015 | A | 09-12-2010 | NONE | | |

EPO FORM P0459

For more details about this annex : see Official Journal of the European Patent Office, No. 12/82